# EUROPÄISCHE PATENTANMELDUNG

(11) **EP 0 574 598 A1**
(43) Veröffentlichungstag der Anmeldung: **22.12.1993**
(21) Anmeldenummer: 92109990.9
(22) Anmeldetag: 13.06.1992
(51) Int. Cl.: G06F 5/06

(54) **Datenpufferspeicher**

(71) Anmelder: International Business Machines Corporation, Armonk, N.Y. 10504 (US)
(72) Erfinder: Hilgendorf, Rolf Dipl.Ing., W-7030 Böblingen (DE); Häss, Jürgen Dipl.Ing., W-7032 Sindelfingen (DE)
(74) Vertreter: Schäfer, Wolfgang, Dipl.-Ing.

(57) **Zusammenfassung**

In einem Computersystem mit Datenbussen (a,b), die unterschiedliche Taktfrequenzen, Datenübertragungsbreiten und/oder Synchronisationssteuerung haben, wird ein Datenpuffer (1) dazu verwendet, die zu übertragenden Daten, z.B. von einem Bus (a) zu empfangen und an einen Bus (b) weiterzuleiten. Dieser Datenpuffer, bzw. Datenzwischenspeicher wird z.B. vom Bus (a) her von der Schreibadreßerzeugung, z.B. in Form eines Schreibadreßzählers (5) gesteuert, wobei jeweils beim Empfang weiterer Daten die Schreibadresse hochgezählt und der Füllstandszähler (8) weitergeschaltet wird. Der Füllstandszähler arbeitet dabei mit einer speziellen Codierung, die im zugeordneten Synchronisationszwischenspeicher (9) schnell und "Glitch"-frei in das Taktsystem des Datenpufferspeichers umgesetzt wird. Der Datenspeicher wird außerdem von einer Schaltung (6) gesteuert, die die Leseadresse erzeugt. Diese Schaltung kann entweder ein Register sein, in dem der jeweilige Leseadreßzeiger steht oder in Form eines Leseadreßzählers implementiert sein. Die Adresse wird in eine Codierung, vergleichbar zu der im Füllstandszähler, verschlüsselt und dann mit dem Inhalt des Füllstandszähler verglichen. Das Ergebnis dieses Vergleichs steuert den Ausgang des Datenpufferspeichers und initialisiert das Signal "Daten verfügbar". Zusätzlich wird noch ein Rücksetzsignal erzeugt, das die Benutzung des Datenpuffers für den Datentransfer des nächsten Blocks vorbereitet.

## Beschreibung

Die Erfindung betrifft einen Datenpufferspeicher sowie ein Verfahren zur Steuerung nach dem Oberbegriff des Patentanspruchs 1 bzw. des Patentanspruchs 4.

In einem Computersystem sind meistens Bussysteme und -Konzeptionen mit verschiedenen Eigenschaften vorhanden. Diese Bussysteme oder -Konzeptionen haben z.B. verschiedene Takt- und Übertragungsfrequenzen, arbeiten synchron oder asynchron, haben eine unterschiedliche Leitungsanzahl, eine unterschiedliche Datenflußbreite und auch eine unterschiedliche Länge. Sie werden in einem Datenverarbeitungssystem über Kopplungsschaltungen und gegebenenfalls auch über Pufferspeicher mit Anpassungsschaltungen miteinander verbunden. Die Kopplungsschaltungen können auch selbst Puffer zur Anpassung der Geschwindigkeitsunterschiede der verschiedenen Bussysteme bzw. Busse enthalten. Sollen z.B. in einem Computersystem Daten von einem Bus zu einem anderen übertragen werden, wobei z.B. der erstere Bus dem Prozessor und seinem Speicher zugeordnet ist, während der zweite Bus diversen Ein- und Ausgabegeräten zugeordnet ist, dann werden die Daten zunächst in die Kopplungsschaltung transportiert und von dort z.B. zu dem entsprechenden Ein- und Ausgabegeräteanschluß. Die Verzögerung durch die Kopplungsschaltung soll dabei so gering wie möglich sein.

Datenpufferspeicher mit einem sogenannten Ping-Pong Datenpuffermechanismus zur Übertragung von Daten von einem Datenbus zu einem anderen Datenbus innerhalb eines Computersystems sind z.B. aus der Europäischen Patentanmeldung 0 416 281 A2 bekannt. Dieser Mechanismus enthält einen Dualportspeichermechanismus, bestehend aus einem Speicherarray und zwei unabhängigen Ports, wobei jeder Port seine eigenen separaten Datenleitungen, Adreßleitungen und Steuerleitungen sowie die dazugehörigen Schaltkreise aufweist. Bei diesem bekanntgewordenen Datenpufferspeicher ist die Schreibschaltung mit einem der unabhängigen Ports zum Empfangen der Daten von einem der Datenbusse gekoppelt, um diese Daten in den ersten Teil des Speicherarrays zu schreiben. Die Leseschaltungen sind bei diesem Pufferspeicher mit den anderen unabhängigen Ports zum simultanen Auslesen aus dem zweiten Teil des Speicherarrays gekoppelt, wobei die ausgelesenen Daten auf den anderen Datenbus übertragen werden. In diesem Zusammenhang wird eine Betriebssteuerlogik beschrieben, die die Lese- und Schreibfunktionen sowohl für den ersten als für den zweiten Teil des Speicherarrays in beiden Richtungen durchführen kann. Es ist außerdem ein Schaltungsbeispiel angegeben, wo ein Paar eines Dualportspeichermechanismus zum Übertragen von Daten dient, bei dem der erste Bus eine größere Datenbreite und der zweite Bus eine geringere Datenbreite aufweist.

Außerdem ist im IBM TDB, Volume 27, Nr. 1A, Juni 1984, Seiten 334-337, eine Schaltungsanordnung beschrieben, die ebenfalls einen Datenpufferspeicher zwischen zwei unterschiedlichen Datenbussystemen aufweist. Obwohl hier eine prinzipielle Lösung gezeigt ist, wie man Datentransfer zwischen zwei Datenbussystemen mit unterschiedlichen Eigenschaften erreichen kann, ist die Verwendung eines Dualportpufferspeichers technisch relativ aufwendig. Die angegebenen Steuerschaltungen zeichnen sich ebenfalls durch einen hohen technischen Schaltungsaufwand aus.

Der Erfindung liegt deshalb die Aufgabe zugrunde, eine Steuerschaltung und ein Betriebsverfahren für einen Pufferspeicher einer Datenverarbeitungsanlage bzw. Informationsverarbeitungsanlage zu schaffen, wobei die miteinander über den Datenpufferspeicher zu verbindenden Datenbusse bzw. Datenbussysteme unterschiedliche Taktfrequenzen und andere unterschiedliche Eigenschaften aufweisen.

Eine weitere Aufgabe besteht darin, die Art des verwendeten Schreibadreßzeigers, auch als Füllstandszähler in einer Schaltung implementiert, das heißt die Verwendung der Codierung, seine Erzeugung und das Zurücksetzen des Zeigers zu verbessern, wobei zu beachten ist, daß die Taktimpulsfolgen der beiden Busse nicht miteinander verbunden sind.

Die Lösung der Erfindung für die Steuerschaltung besteht im Kennzeichen des Patentanspruchs 1 und die Lösung für das Verfahren zur Steuerung bzw. zum Betrieb des Pufferspeichers bzw. seiner Steuerschaltung ist im Kennzeichen des Patentanspruchs 4 angegeben.

Ein sehr wichtiger Punkt liegt also in der Art des verwendeten Schreibadreßzeigers, der hier als Füllstandszähler implementiert ist und nicht im Austausch der Adreßzeiger zwischen Schreib- und Leseteil. Das heißt also, daß es hier insbesondere auf die Verwendung der Codierung, die Erzeugung und das Zurücksetzen des Adreßzeigers sowie die zeitliche Steuerung ankommt.

Die Umgebung, in der die erfindungsgemäße Steuerschaltung eingesetzt werden soll, besteht normalerweise aus Teilen einer synchroner Logik, die im Schreibteil des Pufferspeichers mit einer kürzeren Zeit (z.B. 20 Nanosekunden) als im Leseteil (z.B. 27 Nanosekunden) betrieben wird. Beide genannten Taktfolgen sind miteinander nicht verbunden und ihre Werte können sich im Laufe der technischen Entwicklung ändern. Der Übergang zwischen dem Schreib- und dem Leseteil ist also nicht synchron sondern asynchron. Der Leseteil kann den Schreibadreßzeiger zu jedem Zeitpunkt abtasten, auch wenn dieser gerade verändert wird. Bei einem binär-codierten Zeiger können dabei während des Übergangs von 011 nach 100 alle acht möglichen Kombinationen entstehen, was natürlich zu allen möglichen Fehlinterpretationen und Fehlsteuerungen führen kann. Da der Zeiger in der Regel nicht lange genug unverändert ist, um ihn durch den langsameren Leseteil mindestens zweimal abzutasten, ist die Codierung so gewählt, daß ein Abtasten in jedem Fall ein eindeutiges Ergebnis bringt; im schlechtesten Fall den alten Inhalt oder normalerweise bereits den neuen erhöhten Wert. Damit erhält man für den schlechteren Fall eine Verzögerung und zwar von nur einem Zyklus, der nicht in's Gewicht fällt. Die Erzeugung des Signals "Daten verfügbar" ist durch diese Schaltung so schnell, daß bei einem Zyklus von z.B. 27 Nanosekunden eine Verriegelungsschaltung zur Synchronisation bis maximal 20 Nanosekunden metastabil sein darf, ohne die Funktion zu gefährden. Die gewählte Codierung garantiert weiter, daß bei einer Abtastung maximal eine Verriegelungsschaltung metastabil werden kann. Die Betriebsweise des Pufferspeichers ist so, daß das Auslesen des Pufferspeichers so früh wie möglich erfolgen soll, aber erst nachdem der gesamte Inhalt gelesen ist, wieder neu geschrieben wird. Deshalb startet der Leseteil das Zurücksetzen des Adreßzeigers und beendet diesen Betriebsmodus erst, wenn auch die Verriegelungsschaltungen für die Synchronisation für den Adreßzeiger, z.B. in Form eines Ladezählers, zurückgesetzt sind.

Die Erfindung wird nun anhand von in den Zeichnungen dargestellten Ausführungsbeispielen näher beschrieben.

Es zeigen:
- Fig. 1: Ein Blockschaltbild eines Pufferspeichers mit zugehörigen Steuerschaltungen;
- Fig. 2: Ein detailliertes Blockschaltbild einer Steuerschaltung für den Datenpufferspeicher;
- Fig. 3: Eine Ausführung einer Steuerschaltung für den Pufferspeicher und
- Fig. 4: Ein Zeitdiagramm für die Schaltungsanordnung nach Fig. 3.
- Fig. 5: Eine Modifikation des Blockschaltbilds nach Fig. 2;

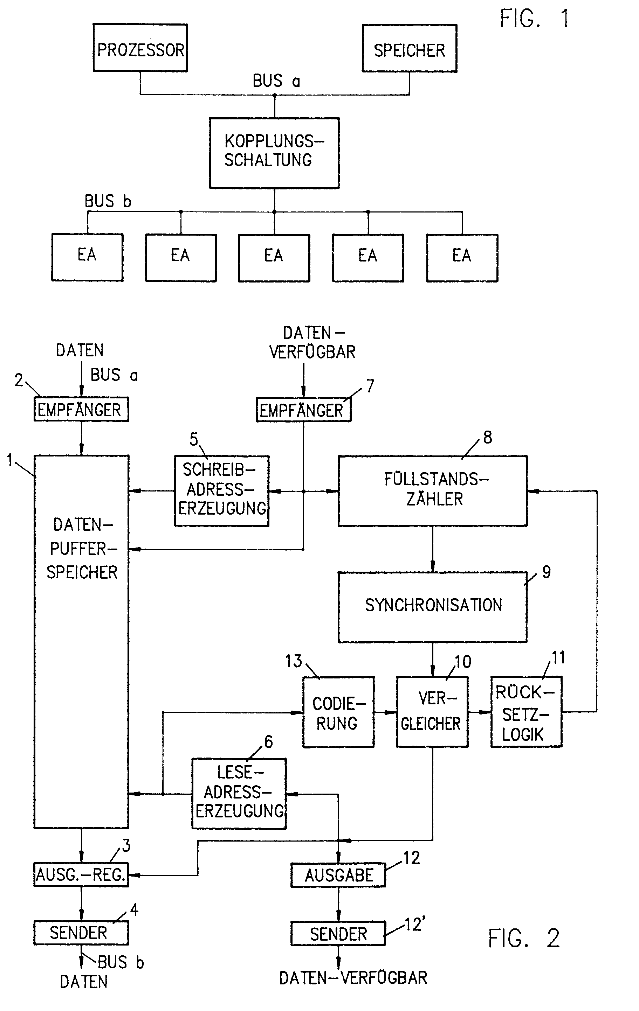

In einem Computersystem nach Fig. 1 werden häufig aus Leistungsgründen Bussysteme mit synchronem Betriebsprotokoll verwendet. Wegen der begrenzten Leitungsanzahl, Breite oder Ausdehnung solcher Busse existieren meist mehrere Busse mit unterschiedlichen Zykluszeiten in einem solchen System nebeneinander. Sie werden über Kopplungsschaltungen und gegebenenfalls über Pufferspeicher mit Anpassungsschaltungen miteinander verbunden.

Der Datentransfer in einem solchen Verbund geschieht meist in Form von Datenpaketen von unterschiedlicher Länge, wobei jedoch eine Maximallänge definiert ist. Die Kopplungsschaltungen können auch selbst Pufferspeicher zur Anpassung der Geschwindigkeitsunterschiede auf den zu verbindenden Bussen enthalten.

Fig. 1 zeigt ein Computersystem mit zwei Bussen a und b. Am Bus a sind der Prozessor und sein Speicher, am Bus b diverse Ein- und Ausgabegeräte EA angeschlossen.

Sollen nun Daten aus dem Speicher ausgegeben werden, so werden diese zunächst in die Kopplungsschaltung transportiert und von dort zum EA-Anschluß. Die Verzögerung durch die Kopplungsschaltung soll so gering wie möglich sein.

Fig. 2 zeigt das Blockschaltbild eines Zwischenspeichers mit der zugehörigen Zugriffslogikschaltung einer Kopplungsschaltung.

Im nachfolgenden wird der Datenfluß und die Arbeitsweise des Schaltbildes nach Fig. 2 detailliert beschrieben.

Zentraler Teil des Datenflusses von dem Computersystem nach Fig. 1 + 2 ist der Datenpufferspeicher 1, welcher die zu übertragenden Daten vom Bus a empfangen und an Bus b weitersenden soll.

Dieser Datenpufferspeicher wird von zwei Logikblöcken kontrolliert. Auf der oberen Seite (Bus a) von der Schreibadresserzeugungsschaltung 5, welche jeweils beim Empfang weiterer Daten die Schreibspeicheradresse hochzählt und den Füllstandszähler 8 weiterschaltet. Dieser Füllstandszähler 8, ein wesentlicher Teil dieser Erfindung, arbeitet mit einer speziellen Codierung, die in der folgenden Synchronisations-Logik 9 schnell und "Glitch"-frei in das Taktsystem der unteren Seite (Bus b) der Fig. 2 umgesetzt wird.

Auf der unteren Seite wird der Datenpufferspeicher von einer Logikschaltung 6 angesteuert, welche eine Leseadresse erzeugt. Die Adresse wird umgeschlüsselt, in eine Codierung vergleichbar zu der im Füllstandszähler 8 und dann mit dessen Inhalt, der im Synchronisationszwischenspeicher 9 verriegelt ist, durch einen Vergleicher 10 verglichen. Das Ergebnis dieses Vergleiches steuert den Ausgang 3, 4 des Datenpufferspeichers 1 und das Ausgangsregister 12, das dann "Daten verfügbar" signalisiert.

Zusätzlich wird noch ein Rücksetzsignal in der Rücksetzlogik 11 erzeugt, welches die Benutzung des Datenpufferspeichers 1 für den Datentransfer des nächsten Blocks vorbereitet.

Die Schaltung nach Fig. 2 besteht im wesentlichen aus einem Datenpfufferspeicher 1 mit einem Empfänger 2 für Daten und einem Ausgangsregister 3, dem ein Sender 4 zur Ausgabe der Daten nachgeschaltet ist. Das Ausgangsregister 3 ist nicht in jeder möglichen Implementation der Schaltung erforderlich. Gesteuert wird der Datenpufferspeicher 1 von der Schreibadresserzeugungsschaltung 5 und der Leseadresserzeugungsschaltung 6. Die Schreibadresserzeugungsschaltung 5 bekommt ihrerseits Steuersignale "Daten verfügbar" über einen Empfänger 7 sowie von einem Füllstandszähler 8. Dem Füllstandszähler 8 ist eine Synchronisationsschaltung 9 nachgeordnet, die ihrerseits ausgangsseitig mit einem Vergleicher 10 verbunden ist. Der Ausgang des Vergleichers 10 wird einmal über eine Rücksetzlogik 11 auf den Füllstandszähler 8 gegeben und zum anderen auf ein Ausgangsregister 12, die Leseadresserzeugung 6 und das Ausgangsregister 3 des Datenpuffers 1. Der Vergleicher 10 bekommt außerdem ein Eingangssignal von der Leseadresserzeugungsschaltung 6 über eine Codierschaltung 13. Am Sender 12', der dem Ausgangsregister 12 nachgeschaltet ist, erscheint gegebenenfalls das Signal "Daten verfügbar".

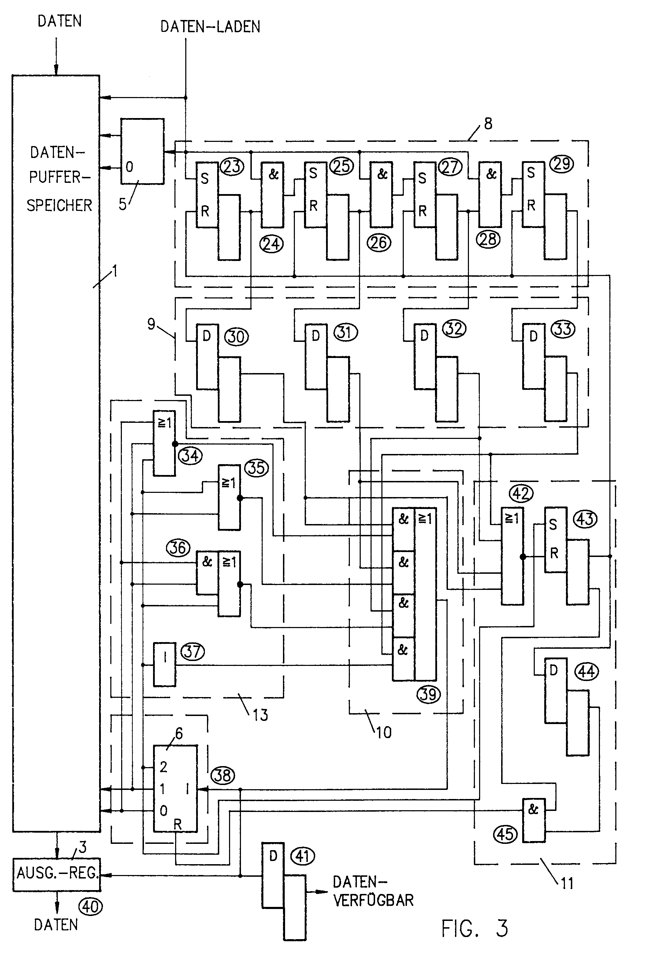

Es wird nun angenommen, daß in den Datenpufferspeicer 1 nach Fig. 3, der eine bestimmte Datenbreite besitzt, bis zu vier Wörter geladen werden können. Die zu ladenden Daten bzw. Wörter werden durch ein Signal "Daten Laden (b)" bereitgestellt. Das Laden kann zum Beispiel zu jedem Zyklus erfolgen, oder zum Beispiel mit einer Lücke bis zu 20 Zyklen zwischen zwei aufeinanderfolgenden Wörtern. Der Schreibimpuls für das Signal (b) wird dazu verwendet, um den Füllstandszähler 8 sowie die Schreibadresse bzw. den Zeiger weiterzuschalten. Am Beginn jeder Operation befindet sich die Leseadresse, die Schreibadresse und der Füllstandszähler 8 im Ausgangs- oder Rücksetzzustand. Dadurch, daß die Leseadresse sich im Rücksetzzustand befindet, führen die logischen Schaltungen 34 bis 37 in Fig. 3 an ihren Ausgängen das Signal "1". Wenn das Signal "Daten Laden (b)" in den aktiven Zustand übergeht und zwar zum Beispiel für einen Zyklus, dann werden die Daten in die Adresse 0 des Datenpufferspeichers 1 abgespeichert. Nach dem Taktimpuls wird die Schreibadresse weitergeschaltet und die Verriegelungsschaltung 23 gesetzt. Die Verriegelungsschaltung 30 wird ebenfalls gesetzt, sobald der entsprechende Taktimpuls anliegt. Dadurch ist eine der Grundbedingungen an der Schaltung 39 erfüllt und diese wird dadurch aktiv. Das Ausgangsregister 3 ist bereit und mit dem nächsten Taktimpuls werden die darin gespeicherten Daten zum Ausgang 40 gegeben. Der gleiche Taktimpuls erhöht die Leseadresse 38 und setzt die Verriegelungsschaltung 41 auf "1". Die Erhöhung ändert das Adressbit 0 der Adresse auf eine "1" und der Schaltkreis 34 hat damit an seinem Ausgang das komplementäre Schaltsignal. Wenn in der Zwischenzeit keine Signale "Daten Laden" empfangen werden, wird die UND-Schaltung 39 wieder inaktiv, das heißt mit anderen Worten, daß sie dann aktiv bleibt, wenn noch mehrere Signale "Daten Laden" ankommen. Der Impuls für "Daten Laden" wird die Verriegelungsschaltung 25 gefolgt von der Verriegelungsschaltung 27 setzen. Der Taktimpuls im angenommenen 27 Nanosekundenbereich wird nun die Verriegelungsschaltung 31 und möglicherweise auch die Verriegelungsschaltung 32 setzen. Die Verriegelungsschaltungen im 27 Nanosekundenbereich werden dann metastabil, wenn ihr Dateneingang sich zeitlich zu nahe am Taktimpuls ändert. Solange die UND-Schaltung 39 aktiv ist, werden die Daten vom Datenpufferspeicher 1 gelesen. Wenn das vierte Wort gelesen ist, wird das letzte Bit der Leseadresse aktiv, wodurch die letzte UND-Funktion an der UND-Schaltung 39 erfüllt ist und auch die Verriegelungsschaltung 43 gesetzt wird. Das Ausgangssignal der Verriegelungsschaltung 43 erzwingt das Rücksetzen der Verriegelungsschaltungen 23, 25, 27 und 29. Außerdem wird die Verriegelungsschaltung 44 gesetzt. Nachdem der Füllstandszähler 8 rückgesetzt ist, werden die Verriegelungsschaltungen 30 bis 33 der Synchronisationsschaltung 9 mit ihrem zugehörigen Taktsignal folgen. Dadurch ist die Bedingung für die Schaltung 42 erfüllt und die Verriegelungsschaltung 43, die rücksetzdominant ist, wird hierdurch zurückgesetzt. Nachdem sie zurückgesetzt ist, ist das Eingangssignal des Schaltkreises 45 im wahren Zustand und es wird eine Rücksetzanforderung für die Leseadresse abgesetzt. Der nächste Zyklus der Schaltung kann nun wiederum mit einer neuen Operation beginnen.

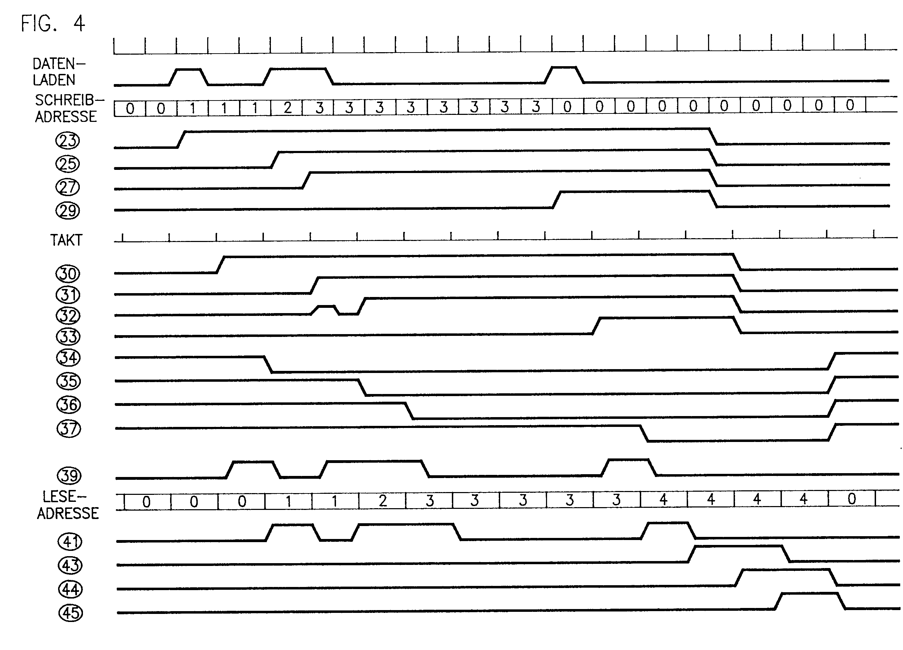

Die beschriebene Betreibsweise der Schaltungsanordnung nach Fig. 3 ist anhand des Zeitdiagrams nach Fig. 4 leicht nachzuvollziehen. Es ist dabei zu berücksichtigen, daß die in den kleinen Kreisen am Anfang einer Zeile stehenden Ziffern der Fig. 4 auch in der Fig. 3 an den jeweiligen Stellen der Schaltung ebenfalls in einem kleinen Kreis angegeben sind. Damit ist eine eindeutige Nachvollziehbarkeit des Zeitdiagrams nach Fig. 4 anhand der in Fig. 3 angegebenen Schaltung sowie deren Betriebsweise ohne weiteres möglich. Im oberen Teil der Fig. 4 ist die jeweils zu einem bestimmten Zeitpunkt anstehende Wortadresse angegeben und im unteren Teil die Leseadresse. Durch die Unterteilung sieht man auch deutlich, daß im oberen Teil die Taktfrequenz höher als im unteren Teil liegt, nämlich für den Schreibteil mit angenommenen 20 Nanosekunden und für den Leseteil mit angenommenen 27 Nanosekunden.

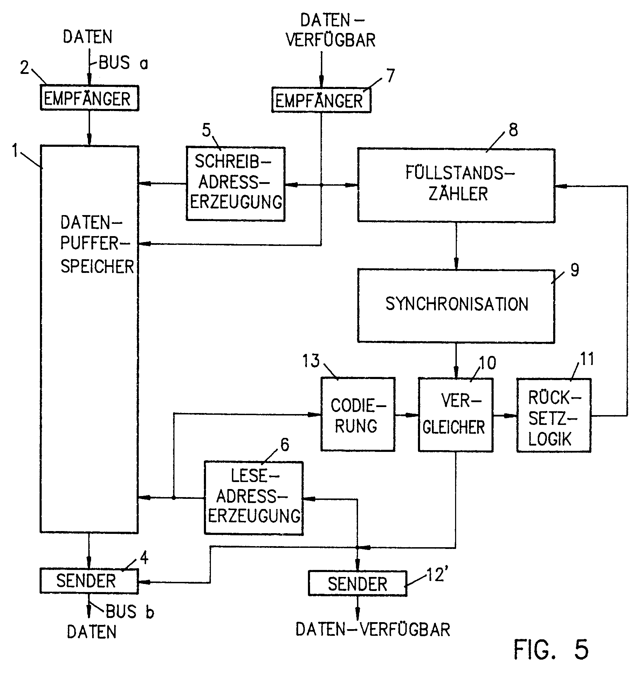

Fig. 5 ist eine Modifikation der Fig. 2, wobei insbesondere die Eingangs- und Ausgangsregister der Fig. 2 weggelassen worden sind. Das heißt mit anderen Worten, die Steuerung sowie das Ein- und Auslesen erfolgt nicht über getrennte Register, sondern jeweils direkt am Empfänger 2 und 7, am Sender 4 und 12' oder am Ausgang des Datenpufferspeichers. Es soll hier auch noch angemerkt werden, daß es möglich ist, den Füllstandszähler 8 nicht nur als reine Zählschaltung zu implementieren, sondern auch als codiertes und hochzählendes Register. Die Umschlüsselvorrichtung, bzw. die Codierschaltung 13 und der Vergleicher 10 können auch als kombinierte Schaltung aufgebaut werden. Diese schaltungstechnischen Maßnahmen haben auf das Konzept der Erfindung jedoch keinen Einfluß. Es ist auch völlig unwichtig, welche Art von Verriegelungsschaltungen, bzw. technisch equivalenten Schaltungen für die einzelnen Register bzw. logischen Schaltstufen und Zähler verwendet werden. Da die Wirkungsweise der Schaltungen nach Fig. 5 und nach Fig. 2 equivalent ist, wird auf eine nochmalige detaillierte Beschreibung verzichtet.

## Patentansprüche

1. Steuerschaltung für einen Pufferspeicher zwischen zwei unterschiedlichen Bus-Systemen einer Datenverarbeitungsanlage bzw. Informationsverarbeitungsanlage, bestehend aus einem Lese- und einem Schreibteil zur Steuerung der Lese- und Schreibzyklen, die durch asynchrone Taktfolgen mit unterschiedlicher Frequenz gesteuert werden, dadurch gekennzeichnet, daß einem Schreibadreßzähler oder -zeiger ein Füllstandszähler zugeordnet ist, der seinerseits mit einem Synchronisationszwischenregister verbunden ist, daß ein Leseadreßzähler oder -zeiger (6) des Datenpufferspeichers (1) mit einem Umschlüssler (13) verbunden ist, dem eine Vergleicherschaltung (10) nachgeschaltet ist, der seinerseits mit dem Synchronisationszwischenregister (9) verbunden ist, und daß der Ausgang der Vergleicherschaltung (10) mit einer Rücksetzlogik (11) für den Füllstandszähler (8), zum Weiterschalten mit dem Leseadreßzähler (6) und dem Ausgang (3 oder 4) für die Daten und der Schaltung (12, 12')für das Signal "Daten verfügbar" verbunden ist.

2. Steuerschaltung nach Anspruch 1, dadurch gekennzeichnet, daß der dem Schreibadreßzähler (5) zugeordnete Füllstandszähler (8) aus bistabilen Kippschaltungen oder Verriegelungsschaltungen (23, 25, 27, 29) mit zwischengeschalteten UND-Schaltungen (24, 26, 28) besteht, daß der nachgeschaltete Synchronisationszwischenspeicher (9) ebenfalls aus bistabilen Kippschaltungen oder Verriegelungsschaltungen (30-33) besteht und daß die Anzahl der Stufen des Synchronisationszwischenspeichers (9) der Anzahl der Stufen des Füllstandszählers (8) entspricht.

3. Steuerschaltung nach Patentanspruch 1 oder 2, dadurch gekennzeichnet, daß der Schreib- und Leseadreßzähler (5 bzw. 6) als Register ausgeführt sind, die den jeweiligen Adreßzeiger enthalten, und daß eine erzeugte Leseadresse in eine Codierung vergleichbar zu der im Füllstandszähler (8) mit Hilfe einer Umschlüssel- bzw. Dekodierschaltung (13) umgeschlüsselt wird und mit der am anderen Eingang der Vergleicherschaltung (10) liegenden Ausgangsgröße des Füllstandszählers (8) verglichen wird, wobei das Ergebnis der Vergleicherschaltung (10) direkt den Ausgang oder das Ausgangsregister (3) des Datenpufferspeichers (1) steuert und das Signal "Daten verfügbar" generiert.

4. Verfahren zum Betrieb der Steuerschaltung nach einem der Ansprüche 1 bis 3, dadurch gekennzeichnet, daß jeweils beim Empfang von Daten am Datenpufferspeicher (1) die Schreibadresse hochgezählt und der Füllstandszähler (8) weitergeschaltet wird, daß der Datenpufferspeicher (1) von einer Schaltung (6) angesteuert wird, die eine Leseadresse erzeugt, die ihrerseits in eine Codierung vergleichbar zu der im Füllstandszähler (8) umgeschlüsselt wird, um dann mit dessen Inhalt verglichen zu werden, und daß das Ergebnis des Vergleichers (10) direkt den Ausgang oder das Ausgangsregister (4) des Pufferspeichers (1) steuert, das Ausgangssignal "Daten verfügbar" generiert und zusätzlich ein Rücksetzsignal erzeugt, das die Steuerschaltung für die Übertragung des nächsten Datenblocks vorbereitet.

5. Verfahren nach Anspruch 4, dadurch gekennzeichnet, daß die Schreib- und die Leseadreßerzeugung asynchron gesteuert ist, daß die Lesesteuerung des Pufferspeichers (1) den Füllstandszähler (8) zu jedem Zeitpunkt, auch während einer Veränderung, abtasten kann und daß die Codierung der Leseadresse so gewählt wird, daß die langsame Lesesteuerung so ausgeführt ist, daß ein Abtasten des schnellen Schreibadreßzeigers bzw. Füllstandszählers in jedem Fall ein eindeutiges Ergebnis erzeugt.

6. Verfahren nach Anspruch 5, dadurch gekennzeichnet, daß bei der Abtastung entweder im schlechtesten Fall der alte Inhalt oder im Normalfall bereits der neue erhöhte Adreßwert anliegt.

7. Verfahren nach den Ansprüchen 5 oder 6, dadurch gekennzeichnet, daß der Datenpufferspeicher (1) dann erst neu einschreibbar ist, nachdem der gesamte Inhalt gelesen worden ist, daß der Leseadreßzeiger bzw. Leseadreßzähler (6) das Zurücksetzen des Schreibadreßzeigers bzw. Schreibadreßzählers (5) startet und diesen Betriebszustand erst beendet, wenn auch die zugeordneten Verriegelungsschaltungen des Synchronisationszwischenregisters (9), das dem Füllstandszähler (8) nachgeordnet ist, zurückgesetzt sind.
